# EUROPEAN PATENT APPLICATION

(11) **EP 1 349 071 A1**
(43) Date of publication of application: **01.10.2003**
(21) Application number: 02290812.3
(22) Date of filing: 29.03.2002
(51) Int. Cl.: G06F 11/26, G06F 11/36

(54) **Integrated circuit with direct debugging architecture**

(71) Applicant: STMicroelectronics N.V., 1077 XX Amsterdam (NL)
(72) Inventor: Moerman, Erik, 9820 Merelbeke (BE)
(74) Representative: Bird, William Edward

(57) **Abstract**

An integrated circuit comprising a main section/processor (1,2) and a subsection/subprocessor (10,18) for debugging the main section (1) is provided with hardware modules (11-15) coupled via a subbus (20) to said subprocessor (18) and coupled to different parts of said main section (1), for debugging more directly. The hardware modules comprise a shiftregister (14) coupled to a chain unit (4) and a clock controller (12) coupled to a clock generator (7) for scanning purposes, a scan controller (13) coupled to said chain unit (4) for selection scanning options, a breakpoint controller (11) coupled to said chain unit (4) for interrupting said scanning, and/or a programmable register (15) coupled to dedicated hardware (8) for tracing purposes. An access module (30) is coupled to an interface (19) for communication with the outside world and is further coupled to an access memory (16). A subprocessor memory (17) stores amendable/replacable software for controlling said subsection (10) and said debugging as well as a transmission of debugging results via said access module (30) to an external debugger (40).

## Description

The invention relates to an integrated circuit comprising a main section with a main processor and a subsection with a subprocessor for debugging at least a part of said main section.

Such an integrated circuit is for example a chip like for example an Application Services Integrated Circuit or ASIC.

A prior art integrated circuit is known from US 5,566,303, which dicloses in its figure 12 a main section (right part) with a main processor (main Central Processing Unit or main CPU) and a subsection (left part) with a subprocessor (subCPU). This subCPU debugs the main section via a Random Access Memeory or RAM and a Read Only Memory or ROM, both coupled to the same main CPU bus.

The known integrated circuit is disadvantageous, inter alia, due to debugging indirectly: both memories read the main CPU bus and store the information read from the main CPU bus, after which the subCPU processes the information read.

It is an object of the invention, inter alia, of providing an integrated circuit which can debug more directly.

The integrated circuit according to the invention is characterised in that said subsection comprises at least two hardware modules coupled via a subbus to said subprocessor and coupled to different parts of said main section.

By introducing two or more hardware modules coupled to said subbus for communication with said subprocessor and coupled to different parts of said main section for communication with these different parts, the debugging is more direct compared to the prior art situation where a RAM and a ROM are just looking at the main CPU bus.

The invention is based upon an insight, inter alia, that prior art debugging architectures having a main processor and a subprocessor are software oriented and therefore slow, and is based upon a basic idea, inter alia, that new debugging architectures should be more hardware oriented, which is faster.

The invention solves the problem, inter alia, of providing an integrated circuit as defined in the preamble which can debug more directly.

A first embodiment of the integrated circuit according to the invention as defined in claim 2 is advantageous in that a first hardware module comprises a shiftregister coupled to a chain unit located in said main section, with a second hardware module comprising a clock controller coupled to a clock generator located in said main section.

By introducing said shiftregister coupled to the chain unit located in the main section and for example comprising at least one chain router and at least one scan chain, a direct communication between said shift register and said chain unit has become possible, for scanning purposes for example. During scanning, the clock generator in the main section needs to be stopped, and flip flops in one or more scan chains need to be provided with a further clock signal, which all is taken care of by said clock controller.

A second embodiment of the integrated circuit according to the invention as defined in claim 3 is advantageous in that a third hardware module comprises a scan controller coupled to said chain unit.

By introducing said scan controller coupled to said subbus and to said chain unit, one or more scan chains can be selected and/or one or more flip flops in one scan chain can be selected, which makes said debugging more direct.

A third embodiment of the integrated circuit according to the invention as defined in claim 4 is advantageous in that a fourth hardware module comprises a breakpoint controller coupled to said chain unit.

By introducing said breakpoint controller coupled to said subbus and to said chain unit, either a breakpoint signal present at said subbus or a breakpoint signal present in said chain unit can be detected for requesting an interruption of said scanning.

A fourth embodiment of the integrated circuit according to the invention as defined in claim 5 is advantageous in that a fifth hardware module comprises a programmable register coupled to dedicated hardware located in said main section.

By introducing said programmable register coupled to said subbus and to said dedicated hardware like for example busses, flip flops and/or shadow registers all located in said main section, a direct communication between said programmable register and said dedicated hardware has become possible, for tracing purposes for example. During tracing, said clock generator in said main section usuallly is not stopped.

A fifth embodiment of the integrated circuit according to the invention as defined in claim 6 is advantageous in that said integrated circuit comprises an access module coupled to an interface located in said subsection, which interface is further coupled to said subbus.

By introducing said access module, located either in said main section or in said subsection or in a further section, communication with the outside world has become possible. Said interface coupled to said subbus and to said access module allows said subprocessor and said access module to communicate with each other.

A sixth embodiment of the integrated circuit according to the invention as defined in claim 7 is advantageous in that said access module is further coupled to an access memory located in said subsection, which access memory is further coupled to said subbus.

By introducing said access memory coupled to said subbus and to said access module, direct communication between said access module and said access memory has become possible, under control of said subprocessor via said interface.

A seventh embodiment of the integrated circuit according to the invention as defined in claim 8 is advantageous in that said subsection comprises a subprocessor memory coupled to said subbus for storing software.

By introducing said subprocessor memory coupled to said subbus, software can be stored, for controlling (via said subprocessor) said subsection.

A eighth embodiment of the integrated circuit according to the invention as defined in claim 9 is advantageous in that said software in said subprocessor memory controls said debugging as well as a transmission of debugging results via said access module to an external debugger.

By introducing said software for controlling (via said subprocessor) said debugging like for example said scanning and/or said tracing and for controlling (via said subprocessor) said transmission of debugging results to the outside world like for example said external debugger, the subsection can take care of smaller problems without informing the outside world, with just the bigger problems being communicated with said outside world.

A nineth embodiment of the integrated circuit according to the invention as defined in claim 10 is advantageous in that said software is amendable/replacable software with amendments/replacements arriving via said access module and originating from said external debugger.

By introducing said amendable and/ or replacable software with amendments and/or replacements arriving via said access module and originating from said external debugger, said software can be updated.

It should be noted that said different parts do not exclude that two hardware modules are further coupled to the same part. Said shiftregister is coupled to the chain unit, said clock controller is coupled to said clock generator, said scan controller is coupled to said chain unit, said breakpoint controller is coupled to said chain unit, and said programmable register is coupled to dedicated hardware located in said main section like for example busses, flip flops and/or shadow registers all located in said main section. So, the different parts comprise the chain unit, the clock generator and the dedicated hardware, but firstly further different parts are not to be excluded, like for example different parts located inside said chain unit, and secondly said two or more hardware modules coupled to different parts may further be coupled to the same part, like for example in case of one or more flip flops in said chain unit corresponding with one or more flip flops in said dedicated hardware.

These and other aspects of the invention will be apparent from and elucidated with reference to the embodiments(s) described hereinafter.

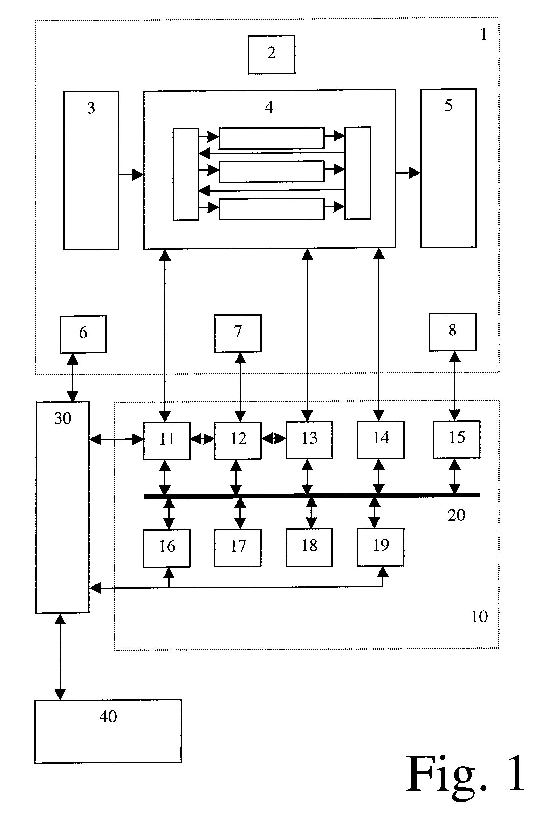

Figure 1 illustrates in block diagram form an integrated circuit according to the invention.

Figure 1 illustrates an integrated circuit 1-30 comprising a main section 1 with a main processor 2 and comprising a subsection 10 with a subprocessor 18 and comprising an access module 30. The integrated circuit 1-30 is coupled to an external debugger 40.

Main section 1 further comprises ATBG? 3 and 5, with chain unit 4 located between both ATBG?s 3 and 5 and comprising two chain routers coupled via three scan chains. Main section 1 also comprises (access module controlled) block 6, clock generator 7 and dedicated hardware 8.

Subsection 10 further comprises five hardware modules 11-15 all coupled to a subbus 20, with hardware module 11 being a breakpoint controller 11 further coupled to chain unit 4, with hardware module 12 being a clock controller 12 further coupled to clock generator 7 and further coupled to breakpoint controller 11, with hardware module 13 being a scan controller 13 further coupled to chain unit 4 and further coupled to clock controller 12, with hardware module 14 being a shift register 14 further coupled to chain unit 4, and with hardware module 15 being a programmable register 15 further coupled to dedicated hardware 8. Subsection 10 also comprises an access memory 16, a subprocessor memory 17, said subprocessor 18 and an interface 19, all coupled to said subbus 20, and with access memory 16 and interface 19 further being coupled to an access module 30, which is further coupled to said breakpoint controller 11, to said block 6 (being an access module controlled block) located in main section 1, and to said external debugger 40.

The invention relates to an integrated circuit 1-30 comprising a main section 1 with a main processor 2 and a subsection 10 with a subprocessor 18 for debugging at least a part (4 and/or 8) of said main section 1.

Such an integrated circuit 1-30 is for example a chip like for example an Application Services Integrated Circuit or ASIC.

A prior art integrated circuit is known from US 5,566,303, which dicloses in its figure 12 a main section (right part) with a main processor (main Central Processing Unit or main CPU) and a subsection (left part) with a subprocessor (subCPU). This subCPU debugs the main section via a Random Access Memeory or RAM and a Read Only Memory or ROM, both coupled to the same main CPU bus.

The known integrated circuit is disadvantageous, inter alia, due to debugging indirectly: both memories read the main CPU bus and store the information read from the main CPU bus, after which the subCPU processes the information read.

It is an object of the invention, inter alia, of providing an integrated circuit which can debug more directly.

The integrated circuit 1-30 according to the invention is characterised in that said subsection 10 comprises at least two hardware modules 11-15 coupled via a subbus 20 to said subprocessor 18 and coupled to different parts (4,7,8) of said main section 1.

By introducing two or more hardware modules 11-15 coupled to said subbus 20 for communication with said subprocessor 18 and coupled to different parts (4,7,8) of said main section 1 for communication with these different parts (4,7,8), the debugging is more direct compared to the prior art situation where a RAM and a ROM are just looking at the main CPU bus.

A first embodiment of the integrated circuit 1-30 according to the invention is advantageous in that a first hardware module comprises a shiftregister 14 coupled to a chain unit 4 located in said main section 1, with a second hardware module comprising a clock controller 12 coupled to a clock generator 7 located in said main section 1.

By introducing said shiftregister 14 coupled to the chain unit 4 located in the main section 1 and for example comprising at least one chain router and at least one scan chain, a direct communication between said shift register and said chain unit has become possible, for scanning purposes for example. During scanning, the clock generator 7 in the main section needs to be stopped, and flip flops in one or more scan chains need to be provided with a further clock signal, which all is taken care of by said clock controller 12.

A second embodiment of the integrated circuit 1-30 according to the invention is advantageous in that a third hardware module comprises a scan controller 13 coupled to said chain unit 4.

By introducing said scan controller 13 coupled to said subbus 20 and to said chain unit 4, one or more scan chains can be selected and/or one or more flip flops in one scan chain can be selected, which makes said debugging more direct.

A third embodiment of the integrated circuit 1-30 according to the invention is advantageous in that a fourth hardware module comprises a breakpoint controller 11 coupled to said chain unit 4.

By introducing said breakpoint controller 11 coupled to said subbus 20 and to said chain unit 4, either a breakpoint signal present at said subbus 20 or a breakpoint signal present in said chain unit 4 can be detected for requesting an interruption of said scanning.

A fourth embodiment of the integrated circuit 1-30 according to the invention is advantageous in that a fifth hardware module comprises a programmable register 15 coupled to dedicated hardware 8 located in said main section 1.

By introducing said programmable register 15 coupled to said subbus 20 and to said dedicated hardware 8 like for example busses, flip flops and/or shadow registers all located in said main section 1, a direct communication between said programmable register 15 and said dedicated hardware 8 has become possible, for tracing purposes for example. During tracing, said clock generator 7 in said main section usuallly is not stopped.

A fifth embodiment of the integrated circuit 1-30 according to the invention is advantageous in that said integrated circuit 1-30 comprises an access module 30 coupled to an interface 19 located in said subsection 10, which interface 19 is further coupled to said subbus 20.

By introducing said access module 30, located either in said main section 1 or in said subsection 10 or in a further section, communication with the outside world has become possible. Said interface 19 coupled to said subbus 20 and to said access module 30 allows said subprocessor 18 and said access module 30 to communicate with each other.

A sixth embodiment of the integrated circuit 1-30 according to the invention is advantageous in that said access module 30 is further coupled to an access memory 16 located in said subsection, which access memory 16 is further coupled to said subbus 20.

By introducing said access memory 16 coupled to said subbus 20 and to said access module 30, direct communication between said access module 30 and said access memory 16 has become possible, under control of said subprocessor 18 via said interface 19.

A seventh embodiment of the integrated circuit 1-30 according to the invention is advantageous in that said subsection 10 comprises a subprocessor memory 17 coupled to said subbus 20 for storing software.

By introducing said subprocessor memory 17 coupled to said subbus 20, software can be stored, for controlling (via said subprocessor 18) said subsection 10.

A eighth embodiment of the integrated circuit 1-30 according to the invention is advantageous in that said software in said subprocessor memory 16 controls said debugging as well as a transmission of debugging results via said access module 30 to an external debugger 40.

By introducing said software for controlling (via said subprocessor 18) said debugging like for example said scanning and/or said tracing and for controlling (via said subprocessor 18) said transmission of debugging results to the outside world like for example said external debugger 40, the subsection 10 can take care of smaller problems without informing the outside world, with just the bigger problems being communicated with said outside world.

A nineth embodiment of the integrated circuit 1-30 according to the invention is advantageous in that said software is amendable/replacable software with amendments/replacements arriving via said access module 30 and originating from said external debugger 40.

By introducing said amendable and/ or replacable software with amendments and/or replacements arriving via said access module 30 and originating from said external debugger 40, said software can be updated.

The invention is based upon an insight, inter alia, that prior art debugging architectures having a main processor and a subprocessor are software oriented and therefore slow, and is based upon a basic idea, inter alia, that new debugging architectures should be more hardware oriented, which is faster.

The invention solves the problem, inter alia, of providing an integrated circuit 1-30 as defined before which can debug more directly.

It should be noted that said different parts do not exclude that two hardware modules 11-15 are further coupled to the same part. Said shiftregister 14 is coupled to the chain unit 4, said clock controller 12 is coupled to said clock generator 7, said scan controller 13 is coupled to said chain unit 4, said breakpoint controller 11 is coupled to said chain unit 4, and said programmable register 15 is coupled to dedicated hardware 8 located in said main section 1 like for example busses, flip flops and/or shadow registers all located in said main section 1. So, the different parts comprise the chain unit 4, the clock generator 7 and the dedicated hardware 8, but firstly further different parts are not to be excluded, like for example different parts located inside said chain unit 4, and secondly said two or more hardware modules 11-15 coupled to different parts may further be coupled to the same part, like for example in case of one or more flip flops in said chain unit 4 corresponding with one or more flip flops in said dedicated hardware 8.

When scanning, usually not done real-time and being a low speed process, the following happens. Either in response to an activation signal from the outside world arriving via external debugger 40, access module 30, and either access memory 16 or interface 19, and subbus 20, or in response to a timing signal generated in subsection 10, or in response to an indication signal generated in main section 1 and supplied via either access module 30 or one of said hardware modules 11-15, scanning software stored in subprocessor memory 17 is activated. As a result, subprocessor 18 controls via subbus 20 breakpoint controller 11 which is trying to find a match between signals present on subbus 20 or present in chain unit 4 and predefined signals, and which informs subprocessor 16 of each matching result. Subprocessor 18 further controls via subbus 20 clock controller 12, which in response stops clock generator 7 and possibly supplies its own clock pulses to chain unit 4, for example via scan controller 13. Subprocessor 18 further controls via subbus 20 scan controller 13 and shift register 14 in such a way that scan controller controls chain unit such that certain scan chains (usually comprising flip flops) or parts of scan chains (usually flip flops) are scanned, thereby possibly using said clock pulses originating from clock controller 12, and with shift register 14 receiving the information from said selected flip flops for reading purposes. Said scanning software processes said information, and decides whether it is necessary to amend information in said main section 1, to be done under control of subprocessor 18 and via shift register 14, and decides whether the outside world needs to be informed of the debugging results, in case of smaller problems this is usually not necessary, in case of bigger problems this is usually necessary. This deciding, compared to prior art solutions, allows the subsection 10 to use a higher speed.

So, with scan controller 13 just the interesting parts can be selected to be scanned, which saves a lot of time. Further, via scan controller 13 and said chain routers, each flip flop in said main section 1 can be scanned.

When tracing, usually done real-time and being a high speed process, the following happens. Either in response to an activation signal from the outside world arriving via external debugger 40, access module 30, and either access memory 16 or interface 19, and subbus 20, or in response to a timing signal generated in subsection 10, or in response to an indication signal generated in main section 1 and supplied via either access module 30 or one of said hardware modules 11-15, tracing software stored in subprocessor memory 17 is activated. As a result, subprocessor 18 controls via subbus 20 programmable register 15, which starts tracing (monitoring) dedicated hardware 8, for example comprising one or more busses, one or more flip flops and/or one or more shadow registers all located in said main section 1. Said programmable register 15 has some decision authority, and can start/stop the tracing and (temporarily) store some tracing results wihtout informing subprocessor 18. In case programmable register 15 has decided that subprocessor 18 needs to be informed, this is done via subbus 20, and information is supplied to subprocessor 18. Then said tracing software processes said information, and decides whether the outside world needs to be informed of the debugging results, in case of smaller problems this is usually not necessary, in case of bigger problems this is usually necessary. This deciding, compared to prior art solutions, allows the subsection 10 to use a higher speed.

Said scanning software and said tracing software can be updated via access module 30 and external debugger 40. Interface 19 for example being a peek/poke register will thereby prevent that the updating will slow down the functioning of the subsection.

Summarizing, the integrated circuit 1-30 according to the invention combines speed, flexibility and efficiency, and will allow the production of better and more efficient ASICs.

## Claims

1. Integrated circuit comprising a main section (1) with a main processor (2) and a subsection (10) with a subprocessor (18) for debugging at least a part of said main section (1), **characterised in that** said subsection (10) comprises at least two hardware modules (11-15) coupled via a subbus (20) to said subprocessor (18) and coupled to different parts of said main section (1).

2. Integrated circuit according to claim 1, **characterised in that** a first hardware module comprises a shiftregister (14) coupled to a chain unit (4) located in said main section (1), with a second hardware module comprising a clock controller (12) coupled to a clock generator (7) located in said main section.

3. Integrated circuit according to claim 2, **characterised in that** a third hardware module comprises a scan controller (13) coupled to said chain unit (4).

4. Integrated circuit according to claim 2 or 3, **characterised in that** a fourth hardware module comprises a breakpoint controller (11) coupled to said chain unit (4).

5. Integrated circuit according to claim 2, 3 or 4, **characterised in that** a fifth hardware module comprises a programmable register (15) coupled to dedicated hardware (8) located in said main section (1).

6. Integrated circuit according to claim 1, 2, 3, 4 or 5, **characterised in that** said integrated circuit comprises an access module (30) coupled to an interface (19) located in said subsection (1), which interface (19) is further coupled to said subbus (20).

7. Integrated circuit according to claim 6, **characterised in that** said access module (30) is further coupled to an access memory (16) located in said subsection (10), which access memory (16) is further coupled to said subbus (20).

8. Integrated circuit according to claim 7, **characterised in that** said subsection (10) comprises a subprocessor memory (17) coupled to said subbus (20) for storing software.

9. Integrated circuit according to claim 8, **characterised in that** said software in said subprocessor memory (17) controls said debugging as well as a transmission of debugging results via said access module (30) to an external debugger (40).

10. Integrated circuit according to claim 9, **characterised in that** said software is amendable/replacable software with amendments/replacements arriving via said access module (30) and originating from said external debugger (40).
